# EUROPÄISCHE PATENTSCHRIFT

(11) **EP 2 201 257 B1**
(45) Veröffentlichungstag und Bekanntmachung des Hinweises auf die Patenterteilung: **15.08.2012**
(21) Anmeldenummer: 08840521.2
(22) Anmeldetag: 14.10.2008
(51) Int. Cl.: F16D 3/62

(54) **ELASTISCHE WELLENKUPPLUNG**
ELASTIC SHAFT COUPLING
ACCOUPLEMENT ÉLASTIQUE D'ARBRES

(30) Priorität: 15.10.2007 DE 102007050360
(43) Veröffentlichungstag der Anmeldung: 30.06.2010
(73) Patentinhaber: GKN Stromag AG, 59425 Unna (DE)
(72) Erfinder: KAMPS, Thomas, 59439 Holzwickede (DE); FUHRMANN, Thomas, 58313 Herdecke (DE); DOROK, Günter, 59174 Kamen (DE); JASCHKE, Markus, 44534 Lünen (DE); ENNULAT, Alexander, 72587 Strohweiler (DE); VAN DIJK, Klass, NL-7961 AK Ruinerwold (NL); SCHARFER, Erhard, 63165 Mühlheim am Main (DE)
(74) Vertreter: Patentanwälte Ruff, Wilhelm, Beier, Dauster & Partner
(86) Internationale Anmeldenummer: PCT/EP2008/008674
(87) Internationale Veröffentlichungsnummer: WO 2009/049857

(56) Entgegenhaltungen:
- DE-C- 219 963
- DE-U- 7 411 513
- GB-A- 1 298 420

## Beschreibung

Die Erfindung betrifft eine elastische Wellenkupplung mit zwei Kupplungsteilen, die mittels mehrerer, über den Umfang der Kupplungsteile verteilt angeordneter, elastisch nachgiebiger Kupplungssegmente miteinander verbunden sind, wobei die Kupplungssegmente jeweils formschlüssig über Verbindungspunkte an beiden Kupplungsteilen gelagert sind.

Eine derartige elastische Wellenkupplung ist aus der DE 74 11 513 U bekannt. Die bekannte Wellenkupplung weist eine innenliegende Kupplungsnabe sowie einen außenliegenden Kupplungsflansch auf, zwischen denen eine Vielzahl radial ausgerichteter Laschensegmente angeordnet ist. Jedes Laschensegment ist als elastisch deformierbarer Körper, nämlich als Elastomerkörper ausgeführt und ist an seinen radial innen- bzw. radial außenliegenden Endbereichen mittels jeweils eines Schraubbolzens mit der innenliegenden Kupplungsnabe einerseits und dem außenliegenden Kupplungsflansch andererseits verbunden. Hierzu ist jedes Laschensegment mit zwei achsparallel zu einer Kupplungsdrehachse verlaufenden Durchtritten versehen, in denen jeweils eine Lagerhülse angeordnet ist. Die Lagerhülse wird von jeweils einem Schraubbolzen durchdrungen, der an dem außenliegenden Kupplungsflansch bzw. an der innenliegenden Kupplungsnabe befestigt ist. Durch die beschriebene Lagerung jedes Laschensegments sind die Laschensegmente gelenkig am Kupplungsflansch und an der Kupplungsnabe gelagert. Im Betrieb der Kupplung werden die Laschensegmente auf Zug belastet. Durch die Beweglichkeit der Laschen ergibt sich ein relativ großes Verdrehspiel zwischen den beiden Kupplungsteilen der Kupplung, in dem kein Dreh-moment aufgebaut werden kann.

Eine weitere elastische Wellenkupplung ist aus der GB 1 298 420 bekannt.

Aufgabe der Erfindung ist es, eine elastische Wellenkupplung der eingangs genannten Art zu schaffen, die eine spielfreie Drehmomentübertragung ermöglicht.

Diese Aufgabe wird dadurch gelöst, dass die elastisch nachgiebigen Kupplungssegmente zumindest im Wesentlichen in Umfangsrichtung der Kupplungsteile ausgerichtet sind, und dass die Verbindungspunkte jedes Kupplungssegmentes in Umfangsrichtung zueinander beabstandet sind. Erfindungsgemäß sind die elastisch nachgiebigen Kupplungssegmente tangential zu einer Umfangslinie der Kupplungsteile oder in anderer Art und Weise längs der Umfangsrichtung der elastischen Wellenkupplung ausgerichtet. Durch die zumindest weitgehende Ausrichtung in Umfangsrichtung sind die elastisch nachgiebigen Kupplungssegmente sowohl auf Zug als auch auf Druck belastbar, um entsprechende Drehmomente spielfrei übertragen zu können. Ein Verdrehspiel bei Beginn der Drehmomentübertragung wird somit vermieden. Die Beabstandung der Verbindungspunkte jedes Kupplungssegmentes in Umfangsrichtung unterstützt dies. Der segmentierte Aufbau der Kupplung ermöglicht eine kostengünstige Fertigung. In vorteilhafter Weise sind die Kupplungssegmente lösbar mit den Kupplungsteilen verbunden, um einen Austausch der Kupplungssegmente zu gewährleisten. Vorzugsweise sind die Kupplungssegmente mit Ausnehmungen, insbesondere in Form von Hohlkammerabschnitten, und/oder mit spezifisch gestalteten Außengeometrien versehen. Hierdurch ist es möglich, die Verdrehsteifigkeit zu beeinflussen. Ausnehmungen bzw. Hohlkammerabschnitte dienen dazu, eine Innenbelüftung der Wellenkupplung und der Kupplungssegmente zu ermöglichen. Die Kupplungssegmente können entweder gleich groß oder unterschiedlich groß gestaltet sein. Die Kupplungssegmente können identisch zueinander oder mit unterschiedlichen Geometrien ausgeführt sein. Es ist möglich, entsprechende Ausnehmungen oder Hohlkammerabschnitte der Kupplungssegmente mit Dämpfungsmaterialien aufzufüllen, um eine verbesserte Schwingungsdämpfung oder Ähnliches zu erzielen.

In Ausgestaltung der Erfindung ist jedes Kupplungssegment spiegelsymmetrisch zu seiner Mittelradialebene gestaltet. Dabei ist unabhängig von der Drehrichtung der Wellenkupplung jeweils eine gleichförmige Drehmomentübertragung erzielbar. Die Mittelradialebene ist auf die Kupplungsdrehachse bei betriebsfertig montierten Kupplungssegmenten bezogen.

In weiterer Ausgestaltung der Erfindung ist jedes Kupplungssegment in seinem Mittelabschnitt an dem einen Kupplungsteil und an seinen jeweils gegenüberliegenden Seitenbereichen an dem anderen Kupplungsteil gehalten. Die drei verschiedenen Verbindungspunkte liegen vorzugsweise auf einer gemeinsamen Umfangslinie oder auf einer gemeinsamen Tangentiallinie relativ zur Umfangsrichtung der Kupplung. Sie können auch versetzt zu dieser Umfangslinie vorgesehen sein, solange dennoch eine Beabstandung in Umfangsrichtung verbleibt. Durch die zentrale Anbindung jedes Kupplungssegmentes in seinem Mittelabschnitt und die beidseitige Außenanbindung wird unabhängig von der Drehrichtung der Wellenkupplung immer eine gleichzeitige Zug- und Druckbelastung auf die Kupplungssegmente erzielt.

In weiterer Ausgestaltung der Erfindung ist der Mittelabschnitt im Wesentlichen starr ausgebildet, und von dem Mittelabschnitt ragen zu gegenüberliegenden Seiten hin zwei elastische Deformationsabschnitte ab, die auf Zug und auf Druck belastbar sind. Jedes Kupplungssegment kann mehrteilig ausgebildet sein, wobei bei mehrteiliger Ausführung der jeweilige Mittelabschnitt und die benachbarten Deformationsabschnitte miteinander verbunden sind. Es ist auch möglich, jedes Kupplungssegment einteilig zu gestalten, indem gemäß einer bevorzugten Ausführungsform der Mittelabschnitt und die außenliegenden Deformationsabschnitte in einem einteiligen Elastomerglied integriert sind. Dies ermöglicht eine einfache Herstellung der Kupplungssegmente und demzufolge einen einfachen Aufbau der Wellenkupplung. Die Einstückigkeit der Kupplungssegmente ermöglicht zudem einen raschen Austausch von Kupplungssegmenten. Der Begriff der "Elastomerglieder" soll allgemein verstanden werden als einstückige Körper mit elastischen Eigenschaften, die aus entsprechenden, elastisch nachgiebigen Kunststoffmaterialien wie Elastomeren, Silikonen oder Ähnlichem bestehen.

In weiterer Ausgestaltung der Erfindung ist jedes Elastomerglied mit wenigstens einem Hohlkammerabschnitt versehen. Je nach Gestaltung der Hohlkammerabschnitte ist eine Beeinflussung der Verdrehsteifigkeit der Wellenkupplung erzielbar.

In weiterer Ausgestaltung der Erfindung weist jedes Elastomerglied beidseitig jeweils zwei in einem spitzen Winkel zum Eckbereich aufeinander zulaufende Profilstege auf, die jeweils den wenigstens einen Hohlkammerabschnitt umgrenzen. Die Profilstege werden auf Zug und auf Druck belastet und demzufolge entweder gedehnt oder gestaucht.

In weiterer Ausgestaltung der Erfindung ist jedes Elastomerglied rautenförmig gestaltet. Dies ist eine besonders einfach herstellbare und im Hinblick auf die Drehmomentübertragung vorteilhafte Ausführung. In vorteilhafter Weise weisen die Elastomerglieder eine größere Längserstreckung als Höhe auf und sind mit ihrer Längserstreckung in Umfangsrichtung ausgerichtet. Hierdurch wird die Baugröße der Wellenkupplung kompakt gehalten.

In weiterer Ausgestaltung der Erfindung ist ein Kupplungsteil als Kupplungsnabe ausgebildet, die mit radial nach außen ragenden Lagerstegen zur Verbindung mit den Mittelabschnitten der Kupplungssegmente versehen sind. In weiterer Ausgestaltung weist der andere Kupplungsteil einen die Kupplungsnabe koaxial umgebenden Flanschring auf, der mit radial nach innen ragenden Befestigungslaschen zur Lagerung der Eckbereiche der Kupplungssegmente versehen ist. Auch diese Ausgestaltungen verbessern die Kompaktheit der Wellenkupplung.

In weiterer Ausgestaltung der Erfindung sind sowohl die Lagerstege als auch die Befestigungslaschen jeweils paarweise vorgesehen, wobei jedes Paar von Lagerstegen oder Befestigungslaschen jedes Kupplungssegment auf gegenüberliegenden Axialseiten - auf eine Kupplungsdrehachse bezogen - flankiert. Hierdurch wird eine besonders sichere Lagerung jedes Kupplungssegmentes an beiden Kupplungsteilen erzielt.

In weiterer Ausgestaltung der Erfindung sind die Elastomerglieder aus unterschiedlichen Kunststoffmaterialien mit elastischen Eigenschaften hergestellt. Hierfür können verschiedene Elastomere oder Silikone eingesetzt werden. Dabei ist es auch möglich, jeweils ein Elastomerglied mit unterschiedlichen Materialeigenschaften auszustatten.

In weiterer Ausgestaltung der Erfindung sind die Elastomerglieder mit Verstärkungseinlagen versehen. Hier ist der Einsatz von Verbundwerkstoffen ermöglicht. Vorteilhaft sind als Verstärkungseinlagen Verstärkungsgewebe vorgesehen, die in das entsprechende Material der Elastomerglieder eingebettet sind.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
Fig. 1 zeigt in perspektivischer Explosionsdarstellung eine Ausführungsform einer erfindungsgemäßen elastischen Wellenkupplung und
Fig. 2 die Wellenkupplung nach Fig. 1 in einer Frontansicht in Richtung des Pfeiles II in Fig. 1.

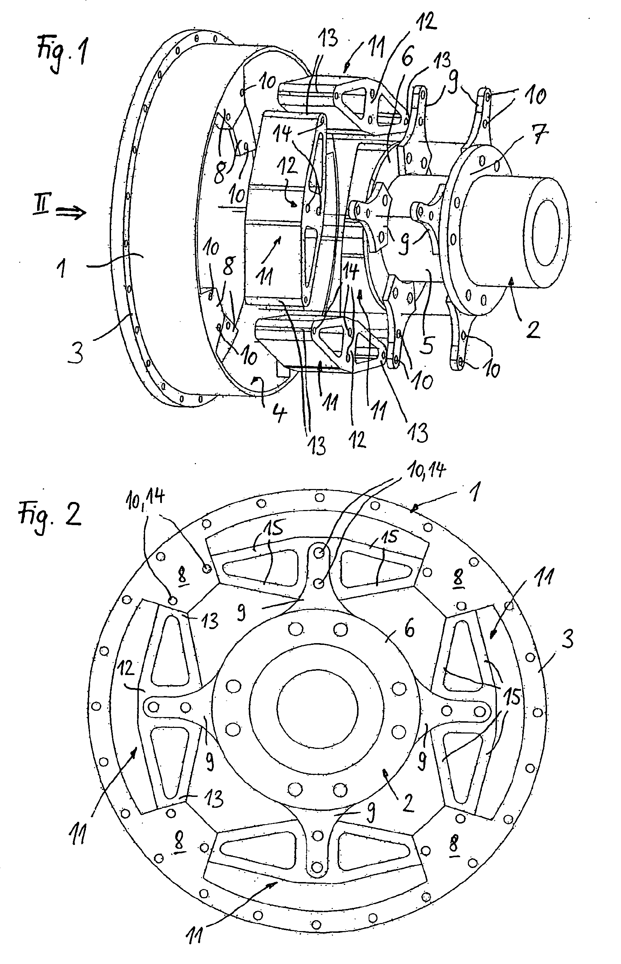

Eine elastische Wellenkupplung gemäß den Figuren 1 und 2 dient dazu, axiale, radiale und winkelige Verlagerungen in einem Antriebsstrang auszugleichen. Zudem dient die elastische Wellenkupplung gemäß den Figuren 1 und 2 dazu, Drehschwingungen zu reduzieren und auszugleichen. Das dargestellte Ausführungsbeispiel ist für eine Montage zwischen einem Schwungrad eines Antriebs und einer Welle eines Getriebes geeignet.

Die Wellenkupplung gemäß den Figuren 1 und 2 weist einen ersten Kupplungsteil 1 auf, der aus Metall hergestellt ist. Die Wellenkupplung umfasst zudem einen zweiten Kupplungsteil 2 in Form einer Kupplungsnabe, die ebenfalls aus Metall hergestellt ist. In montiertem Zustand der Kupplung sind der erste Kupplungsteil 1 und der zweite Kupplungsteil 2 konzentrisch und koaxial zueinander ausgerichtet. Eine Kupplungsdrehachse wird durch eine gemeinsame Mittellängsachse beider Kupplungsteile 1, 2 gebildet. Die Kupplungsdrehachse ist in den Figuren 1 und 2 nicht näher dargestellt. Beide Kupplungsteile 1, 2 sind im Wesentlichen rotationssymmetrisch gestaltet.

Der erste Kupplungsteil 1 weist einen ringförmigen Befestigungsflansch 3 auf, der über entsprechende Befestigungsmittel, die über seinen gesamten Umfang verteilt angeordnet sind, mit einem nicht dargestellten Antriebselement des Antriebsstrangs, insbesondere dem zuvor beschriebenen Schwungrad, verbindbar ist. Von einer Stirnseite des Befestigungsflansches 3 ragt axial - jeweils auf die Kupplungsdrehachse bezogen - ein zylindrischer Flanschring 4 ab, der insbesondere durch Verschweißen starr mit dem Befestigungsflansch 3 verbunden ist.

Die Kupplungsnabe 2 weist eine zylindrische Wellennabe 5 auf, auf der zwei umlaufende Ringflansche 6, 7, insbesondere durch Verschweißen, starr befestigt sind. Die beiden Ringflansche 6, 7 ragen radial zur Wellennabe 5 von dieser ab und sind in einem axialen Abstand - jeweils auf die Kupplungsdrehachse bezogen - zueinander angeordnet, der etwa der axialen Breite des Flanschringes 4 des ersten Kupplungsteiles 1 entspricht. In montiertem Zustand sind die beiden Kupplungsteile 1, 2 derart konzentrisch und koaxial zueinander ausgerichtet, dass sich der zwischen den Ringflanschen 6, 7 befindliche axiale Zwischenraum auf axialer Höhe des Flanschringes 4 befindet. Die beiden Kupplungsteile 1, 2 sind über mehrere, als Kupplungssegmente dienende Elastomerglieder 11, beim dargestellten Ausführungsbeispiel über vier Elastomerglieder 11, miteinander verbunden. Die Elastomerglieder 11 sind in dem radialen und axialen Zwischenraum zwischen der Wellennabe 5 und dem Flanschring 4 angeordnet, der bei koaxialer und konzentrischer Anordnung der im Durchmesser wesentlich kleineren Kupplungsnabe 2 und dem Kupplungsteil 1 verbleibt.

Jedes Elastomerglied 11 ist einstückig aus einem Kunststoffmaterial mit elastischen Eigenschaften, insbesondere einem Kautschukmaterial, hergestellt und weist einen etwa rautenförmigen Querschnitt auf. Alle vier Elastomerglieder 11 sind beim dargestellten Ausführungsbeispiel identisch gestaltet. Jedes Elastomerglied 11 besitzt einen - im Querschnitt gesehen - spiegelsymmetrischen Aufbau und weist einen im Wesentlichen steifen Mittelsteg 12 auf, der im Vergleich zu den Wandungsstärken der übrigen Abschnitte des Elastomergliedes 11 eine große Dicke besitzt. Der Mittelsteg 12 erstreckt sich blockförmig über eine gesamte axiale Breite des Elastomergliedes 11 - auf die Kupplungsdrehachse in montiertem Zustand der Elastomerglieder 11 bezogen. Der Mittelsteg 12 bildet die größte radiale Dicke des Elastomergliedes 11. Vom Mittelsteg 12 aus erstrecken sich zwei Profilschenkel 15 in einem spitzen Winkel zueinander nach außen, die jeweils in einem Eckabschnitt 13 ineinander münden. Hierdurch ergeben sich entsprechend dreieckförmige Seitenabschnitte für jedes Elastomerglied 11, die spiegelsymmetrisch zueinander an den Mittelsteg 12 anschließen. Die entsprechenden seitlichen Eckbereiche 13 weisen eine im Verhältnis zu der Dicke der Profilschenkel 15 vergrößerte Materialstärke auf. Durch den Mittelsteg 12, die Profilschenkel 15 und die Eckabschnitte 13 werden zwei dreieckförmige Hohlkammerabschnitte bei jedem Elastomerglied umschlossen, die zu beiden axialen Seiten der Wellenkupplung hin offen sind, wie anhand der Figuren 1 und 2 gut erkennbar ist.

Jedes Elastomerglied 11 ist im Bereich seines Mittelsteges 12 mit der innenliegenden Kupplungsnabe 2 und im Bereich seiner Eckabschnitte 13 mit dem außenliegenden Flanschring 4 und damit mit dem ersten Kupplungsteil 1 verbunden. Alle Elastomerglieder 11 sind in montiertem Zustand mit ihrer Längserstreckung in Umfangsrichtung ausgerichtet, so dass der Mittelsteg 12 - auf die Kupplungsdrehachse bezogen - radial ausgerichtet ist. Die Eckabschnitte 13 hingegen ragen zu den gegenüberliegenden Seiten rechtwinklig zu dieser radialen Ausrichtung ab und sind demzufolge tangential zu einer Kreisumfangslinie der Wellenkupplung auf Höhe der durch den jeweiligen Mittelsteg 12 definierten Radialen ausgerichtet.

Zur Befestigung des Mittelsteges 12 jedes Elastomergliedes 11 an der Kupplungsnabe 2 sind für jedes Elastomerglied 11 jeweils zwei Lagerstege 9 vorgesehen, die das jeweilige Elastomerglied auf gegenüberliegenden axialen Stirnseiten flankieren und einander paarweise gegenüberliegen. Die Lagerstege 9 sind jeweils einem der beiden Ringflansche 6, 7 zugeordnet und fest mit dem jeweiligen Ringflansch 6, 7 verbunden. Jeder Lagersteg 9 ragt radial vom jeweiligen Ringflansch 6, 7 nach außen ab und ist durch Verschweißen, durch Vernieten, durch Verschrauben oder durch ähnliche Befestigungsmittel starr mit dem jeweiligen Ringflansch 6, 7 verbunden. Jeder Lagersteg 9 weist zwei radial in Abstand übereinander angeordnete Durchtrittsbohrungen 10 auf, denen am Mittelsteg 12 jedes Elastomergliedes zwei korrespondierende Durchtritte 14 zugeordnet sind. Entsprechende Befestigungsbolzen, die die Durchtritte 14 und die Durchtrittsbohrungen 10 durchdringen, dienen dazu, das jeweilige Elastomerglied 11 an der innenliegenden Kupplungsnabe 2 zu halten. Als Befestigungsbolzen sind vorzugsweise Schraubbolzen vorgesehen. Die Befestigungsbolzen sollen eine lösbare Befestigung jedes Elastomergliedes an der Kupplungsnabe 2 ermöglichen, um einen einfachen Austausch bei Elastomergliedern 11 erzielen zu können.

Am Flanschring 4 des ersten Kupplungsteiles 1 sind über den Umfang verteilt insgesamt vier Paare von Befestigungslaschen 8 vorgesehen, die jeweils an den gegenüberliegenden Stirnrandbereichen des Flanschringes 4 angeordnet sind und radial nach innen abragen. Jede Befestigungslasche 8 weist zwei in Umfangsrichtung zueinander beabstandete Durchtrittsbohrungen 10 auf, so dass an jedem Paar von Befestigungslaschen 8 jeweils zwei benachbarte Elastomerglieder 11 mit ihren entsprechenden Außenabschnitten 13 befestigt werden können.

Sowohl die Lagerstege 9 als auch die Befestigungslaschen 8 sind aus Metall hergestellt. Die Befestigungslaschen 8 sind vorzugsweise an dem ersten Kupplungsteil 1 festgeschweißt. Die Außenabschnitte 13 jedes Elastomergliedes 11 sind mit Durchtritten 14 versehen, die parallel zu den Durchtritten 14 des Mittelsteges 12 verlaufen. Die Befestigungslaschen 8 des Flanschringes 4 liegen einander analog zu den Lagerstegen 9 paarweise gegenüber, so dass jeweils ein Paar von Befestigungslaschen 8 zwischen sich entsprechende Eckabschnitte 13 von zwei Elastomergliedern 11 aufnehmen kann. Der Abstand von jeweils zwei einander paarweise gegenüberliegenden Befestigungslaschen 8 - in axialer Richtung gesehen - entspricht etwa der axialen Breite der Elastomerglieder 11, um eine axial spielfreie Aufnahme der Elastomerglieder 11 zu ermöglichen. Gleiches gilt für den Abstand der einander paarweise gegenüberliegenden Lagerstege 9 der innenliegenden Kupplungsnabe 2. Auch für die Befestigung der Außenabschnitte 13 der Elastomerglieder 11 an den Befestigungslaschen 8 sind entsprechende Befestigungsbolzen vorgesehen, die die Durchtritte 14 und die Durchtrittsbohrungen 10 in entsprechender Weise wie beim Mittelsteg 12 durchdringen. Wesentlicher Unterschied ist es lediglich, dass einem Außenabschnitt 13 jeweils nur ein einzelner Durchtritt 14 zugeordnet ist, so dass jeder Außenabschnitt 13 mittels eines einzelnen Befestigungsbolzens am äußeren Kupplungsteil gehalten ist, wohingegen der Mittelsteg 12 jedes Elastomergliedes 11 mit Hilfe von zwei Befestigungsbolzen an der innenliegenden Kupplungsnabe befestigt ist.

In montiertem Zustand der Wellenkupplung ergibt sich die in Fig. 2 dargestellte Ausrichtung und Anordnung der Kupplungsteile 1, 2 und der Elastomerglieder 11. Die Darstellung nach Fig. 2 zeigt den unbelasteten Ruhezustand der Kupplung. Sobald nun über das entsprechende Antriebselement im Betrieb der Wellenkupplung ein Drehmoment auf einen der beiden Kupplungsteile 1, 2 ausgeübt wird, der mit dem entsprechenden Antriebselement des Antriebstranges starr verbunden ist, erfolgt eine entsprechende Drehmomentübertragung über die Elastomerglieder auf den jeweils anderen Kupplungsteil 1, 2. Dabei erfolgt ohne jegliches Verdrehspiel direkt eine Drehmomentübertragung, indem - abhängig von der Drehrichtung des Antriebstranges - die im Drehsinn der Wellenkupplung jeweils vorderen Seitenbereiche jedes Elastomergliedes 11, d.h. die entsprechenden Profilschenkel 15 und die vorne liegenden Außenabschnitte 13 auf Zug belastet werden. Gleichzeitig werden die im Drehsinn hinten liegenden Seitenbereiche jedes Elastomergliedes gestaucht und demzufolge auf Druck belastet. Bei einer entsprechenden Drehrichtungsumkehr erfolgen Zug- und Druckbelastungen in entsprechend umgekehrter Reihenfolge.

Vorzugsweise sind die beiden Profilschenkel 15 jedes Seitenbereiches jedes Elastomergliedes 11 derart spiegelsymmetrisch zu entsprechenden Zugrichtungen und damit zur Tangentialen des entsprechenden Umfangskreises ausgerichtet, dass auf die beiden Profilschenkel jedes Seitenbereiches jeweils gleiche Zug- oder Druckkräfte ausgeübt werden. Dadurch wird eine gleichförmige Belastung der Elastomerglieder erzielt.

In nicht näher dargestellter Weise sind die Elastomerglieder 11 mit Verstärkungseinlagen in Form von Gewebeabschnitten versehen, die in das entsprechende Kunststoffmaterial eingebettet sind. Dadurch ist eine erhöhte Verdrehsteifigkeit erzielbar.

Um eine sichere Kraftübertragung der Elastomerglieder 11 im Bereich der Befestigungsbolzen zu ermöglichen, sind in den Durchtritten 14 vorzugsweise Metallhülsen eingebracht, durch die die Befestigungsbolzen hindurchgesteckt werden.

## Patentansprüche

1. Elastische Wellenkupplung mit zwei Kupplungsteilen, die mittels mehrerer, über den Umfang der Kupplungsteile verteilt angeordneter, elastisch nachgiebiger Elastomerglieder miteinander verbunden sind, wobei die Elastomerglieder jeweils formschlüssig über Verbindungspunkte an beiden Kupplungsteilen gelagert sind, **dadurch gekennzeichnet, dass** die elastisch nachgiebigen Elastomerglieder (11) zumindest im Wesentlichen in Umfangsrichtung der Kupplungsteile (1, 2) ausgerichtet sind, und dass die Verbindungspunkte (10, 14) jedes Elastomergliedes (11) in Umfangsrichtung zueinander beabstandet sind.

2. Wellenkupplung nach Anspruch 1, **dadurch gekennzeichnet, dass** jedes Elastomerglied (11) spiegelsymmetrisch zu seiner Mittelradialebene gestaltet ist.

3. Wellenkupplung nach Anspruch 1 oder 2, **dadurch gekennzeichnet, dass** jedes Elastomerglied (11) in seinem Mittelabschnitt (12) an dem einen Kupplungsteil (2) und an seinen jeweils gegenüberliegenden Seitenbereichen (13) an dem anderen Kupplungsteil (1) gehalten ist.

4. Wellenkupplung nach Anspruch 3, **dadurch gekennzeichnet, dass** der Mittelabschnitt (12) im Wesentlichen starr ausgebildet ist, und dass von dem Mittelabschnitt (12) zu gegenüberliegenden Seiten hin zwei elastische Deformationsabschnitte (13, 15) abragen, die auf Zug und auf Druck belastbar sind.

5. Wellenkupplung nach Anspruch 4, **dadurch gekennzeichnet, dass** der Mittelabschnitt (12) und die außenliegenden Deformationsabschnitte (13, 15) in einem einteiligen Elastomerglied integriert sind.

6. Wellenkupplung nach Anspruch 5, **dadurch gekennzeichnet, dass** jedes Elastomerglied (11) rautenförmig gestaltet ist.

7. Wellenkupplung nach Anspruch 5, **dadurch gekennzeichnet, dass** jedes Elastomerglied (11) einen in montiertem Zustand radial ausgerichteten Mittelsteg (12) aufweist, der mit dem einen Kupplungsteil (2) verbunden ist.

8. Wellenkupplung nach Anspruch 5, **dadurch gekennzeichnet, dass** jedes Elastomerglied (11) mit wenigstens einem Hohlkammerabschnitt versehen ist.

9. Wellenkupplung nach Anspruch 8, **dadurch gekennzeichnet, dass** jedes Elastomerglied (11) beidseitig jeweils zwei in einem spitzen Winkel zu einem Eckbereich (13) aufeinander zulaufende Profilschenkel (15) aufweist, die jeweils wenigstens einen Hohlkammerabschnitt umgrenzen.

10. Wellenkupplung nach Anspruch 1, **dadurch gekennzeichnet, dass** ein Kupplungsteil als Kupplungsnabe (2) ausgebildet ist, die mit radial nach außen ragenden Lagerstegen (9) zur Verbindung mit den Mittelabschnitten (12) der Elastomerglieder (11) versehen sind.

11. Wellenkupplung nach Anspruch 10, **dadurch gekennzeichnet, dass** der andere Kupplungsteil (1) einen die Kupplungsnabe koaxial umgebenden Flanschring (4) aufweist, der mit radial nach innen ragenden Befestigungslaschen (8) zur Lagerung der Eckbereiche (13) der Elastomerglieder (11) versehen ist.

12. Wellenkupplung nach den Ansprüchen 10 und 11, **dadurch gekennzeichnet, dass** sowohl die Lagerstege (9) als auch die Befestigungslaschen (8) jeweils paarweise vorgesehen sind, wobei jedes Paar von Lagerstegen (9) oder Befestigungslaschen (8) jedes Elastomergliedes (11) auf gegenüberliegenden Axialseiten - auf eine Kupplungsdrehachse bezogen - flankiert.

13. Wellenkupplung nach wenigstens einem der vorhergehenden Ansprüche, **dadurch gekennzeichnet, dass** die Elastomerglieder (11) aus unterschiedlichen elastischen Kunststoffmaterialien hergestellt sind.

14. Wellenkupplung nach wenigstens einem der vorhergehenden Ansprüche, **dadurch gekennzeichnet, dass** die Elastomerglieder (11) mit Verstärkungseinlagen versehen sind. - - - - - - - - - -

## Claims

1. Elastic shaft coupling having two coupling parts which are connected to one another by means of a plurality of elastically compliant elastomer elements which are arranged distributed over the circumference of the coupling parts, the elastomer elements being mounted in each case positively on both coupling parts via connecting points, **characterized in that** the elastically compliant elastomer elements (11) are oriented at least substantially in the circumferential direction of the coupling parts (1, 2), and **in that** the connecting points (10, 14) of each elastomer element (11) are spaced apart from one another in the circumferential direction.

2. Shaft coupling according to Claim 1, **characterized in that** each elastomer element (11) is of mirror-symmetrical design with respect to its centre radial plane.

3. Shaft coupling according to Claim 1 or 2, **characterized in that** each elastomer element (11) is held in its centre section (12) on one coupling part (2) and on its side regions (13) which in each case lie opposite on the other coupling part (1).

4. Shaft coupling according to Claim 3, **characterized in that** the centre section (12) is of substantially rigid configuration, and **in that** two elastic deformation sections (13, 15) which can be subjected to tensile loads and to compressive loads project from the centre section (12) towards opposite sides.

5. Shaft coupling according to Claim 4, **characterized in that** the centre section (12) and the deformation sections (13, 15) which lie on the outside are integrated in a single-piece elastomer element.

6. Shaft coupling according to Claim 5, **characterized in that** each elastomer element (11) is of diamond-shaped design.

7. Shaft coupling according to Claim 5, **characterized in that** each elastomer element (11) has a centre web (12) which is oriented radially in the mounted state and is connected to one coupling part (2).

8. Shaft coupling according to Claim 5, **characterized in that** each elastomer element (11) is provided with at least one hollow chamber section.

9. Shaft coupling according to Claim 8, **characterized in that** each elastomer element (11) has, on both sides, in each case two profile limbs (15) which taper towards one another at an acute angle to form a corner region (13) and in each case define at least one hollow chamber section.

10. Shaft coupling according to Claim 1, **characterized in that** one coupling part is configured as a coupling hub (2) which is provided with radially outwardly protruding bearing webs (9) for connection to the centre sections (12) of the elastomer elements (11).

11. Shaft coupling according to Claim 10, **characterized in that** the other coupling part (1) has a flange ring (4) which surrounds the coupling hub coaxially and is provided with radially inwardly protruding fastening tongues (8) for mounting the corner regions (13) of the elastomer elements (11).

12. Shaft coupling according to Claims 10 and 11, **characterized in that** both the bearing webs (9) and the fastening tongues (8) are provided in each case in pairs, each pair of bearing webs (9) or fastening tongues (8) of each elastomer element (11) flanking on opposite axial sides, in relation to a coupling rotational axis.

13. Shaft coupling according to at least one of the preceding claims, **characterized in that** the elastomer elements (11) are produced from different elastic plastic materials.

14. Shaft coupling according to at least one of the preceding claims, **characterized in that** the elastomer elements (11) are provided with reinforcing inserts.

## Revendications

1. Accouplement élastique d'arbre comprenant deux parties d'accouplement, qui sont reliées l'une à l'autre au moyen de plusieurs organes élastomères élastiquement flexibles répartis sur la périphérie des parties d'accouplement, les organes élastomères étant à chaque fois supportés par engagement par correspondance géométrique par le biais de points de connexion sur les deux parties d'accouplement, **caractérisé en ce que** les organes élastomères élastiquement flexibles (11) sont orientés au moins essentiellement dans la direction périphérique des parties d'accouplement (1, 2), et **en ce que** les points de connexion (10, 14) de chaque organe élastomère (11) sont espacés les uns des autres dans la direction périphérique.

2. Accouplement d'arbre selon la revendication 1, **caractérisé en ce que** chaque organe élastomère (11) est configuré avec une symétrie spéculaire par rapport à son plan radial médian.

3. Accouplement d'arbre selon la revendication 1 ou 2, **caractérisé en ce que** chaque organe élastomère (11) est maintenu dans sa portion centrale (12) contre l'une des parties d'accouplement (2) et au niveau de ses régions latérales respectivement opposées (13) contre l'autre partie d'accouplement (1).

4. Accouplement d'arbre selon la revendication 3, **caractérisé en ce que** la portion centrale (12) est réalisée essentiellement rigidement et **en ce que** depuis la portion centrale (12) vers des côtés opposés font saillie deux portions de déformation élastiques (13, 15) qui peuvent être sollicitées en traction et en pression.

5. Accouplement d'arbre selon la revendication 4, **caractérisé en ce que** la portion centrale (12) et les portions de déformation extérieures (13, 15) sont intégrées dans un organe élastomère d'une seule pièce.

6. Accouplement d'arbre selon la revendication 5, **caractérisé en ce que** chaque organe élastomère (11) est configuré sous forme de losange.

7. Accouplement d'arbre selon la revendication 5, **caractérisé en ce que** chaque organe élastomère (11) présente une nervure centrale (12) orientée radialement dans l'état monté, qui est connectée à l'une des parties d'accouplement (2).

8. Accouplement d'arbre selon la revendication 5, **caractérisé en ce que** chaque organe élastomère (11) est pourvu d'au moins une portion de chambre creuse.

9. Accouplement d'arbre selon la revendication 8, **caractérisé en ce que** chaque organe élastomère (11) présente de chaque côté à chaque fois deux branches profilées (15) convergeant l'une vers l'autre suivant un angle aigu jusqu'à une région de coin (13) et délimitant au moins une portion de chambre creuse respective.

10. Accouplement d'arbre selon la revendication 1, **caractérisé en ce qu'**une partie d'accouplement est réalisée sous forme de moyeu d'accouplement (2), qui est pourvu de nervures de palier (9) saillant radialement vers l'extérieur pour la connexion aux portions centrales (12) des organes élastomères (11).

11. Accouplement d'arbre selon la revendication 10, **caractérisé en ce que** l'autre partie d'accouplement (1) présente une bague de bride (4) entourant coaxialement le moyeu d'accouplement, laquelle est pourvue de pattes de fixation (8) saillant radialement vers l'intérieur pour le support des régions de coin (13) des organes élastomères (11).

12. Accouplement d'arbre selon les revendications 10 et 11, **caractérisé en ce que** les nervures de palier (9) ainsi que les pattes de fixation (8) sont prévues à chaque fois par paire, chaque paire de nervures de palier (9) ou de pattes de fixation (8) de chaque organe élastomère (11) étant à chaque fois disposée en bordure sur les côtés axiaux opposés, par rapport à un axe de rotation d'accouplement.

13. Accouplement d'arbre selon au moins l'une quelconque des revendications précédentes, **caractérisé en ce que** les organes élastomères (11) sont fabriqués en différents matériaux en plastique élastiques.

14. Accouplement d'arbre selon au moins l'une quelconque des revendications précédentes, **caractérisé en ce que** les organes élastomères (11) sont pourvus d'inserts de renforcement.
